(19) Europäisches Patentamt
European Patent Office
Office européen des brevets

(11) **EP 4 644 980 A1**

(12) **EUROPEAN PATENT APPLICATION**

(43) Date of publication:
**05.11.2025 Bulletin 2025/45**

(21) Application number: **24216437.4**

(22) Date of filing: **29.11.2024**

(51) International Patent Classification (IPC):
***G02F 1/133*** (2006.01)    ***G02F 1/1347*** (2006.01)

(52) Cooperative Patent Classification (CPC):
**G02F 1/13324;** G02F 1/13476; G02F 2201/44

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.05.2024 TW 113116271**

(71) Applicant: **Iris Optronics Co., Ltd.
Tainan City 711010 (TW)**

(72) Inventors:
• **CHEN, Chih Wei
310021 Zhudong Township (TW)**
• **LIAO, Chi Chang
700022 Tainan City (TW)**

(74) Representative: **Studio Torta S.p.A.
Via Viotti, 9
10121 Torino (IT)**

(54) **COMPOSITE SELF-POWERED TRANSPARENT DISPLAY DEVICE**

(57) A composite self-powered transparent display device (100) includes a first light-transmitting display unit (110), a second light-transmitting display unit (120) and a power generation module (130). The first light-transmitting display unit (110) includes a first light-transmitting region (111) and a light non-transmitting region (112) disposed around the first light-transmitting region (111). The second light-transmitting display unit (120) is stacked on the first light-transmitting display unit (110), and includes a second light-transmitting region (121) and a peripheral region (122). The second light-transmitting region (121) overlaps with the first light-transmitting region (111). The peripheral region (122) overlaps with the light non-transmitting region (112). The power generation module (130) is stacked on the second light-transmitting display unit (120). Incident light can penetrate the first light-transmitting region (111) and the second light-transmitting region (121) sequentially, and can enter the power generation module (130). The power generation module is configured to convert the incident light into an electrical energy to provide the electrical energy to the first light-transmitting display unit (110) and the second light-transmitting display unit (120).

Fig. 2

EP 4 644 980 A1

## Description

## BACKGROUND

Technical Field

The present disclosure relates to a display device. More particularly, the present disclosure relates to a composite self-powered transparent display device.

Description of Related Art

With the improvement of display technologies, display styles are emerging increasingly. For example, it has developed from cathode ray tube (CRT) display to liquid crystal display (LCD) and organic light emitting diode (OLED) thin display, and then expanded to LED spliced display. Display functions have evolved from general displays to transparent backgrounds, such as OLED and MicroLED displays. Due to the increase in screen resolution, the demand for the number of light sources has increased, which represents that the total power consumption of displays has shown an increasing trend. Therefore, how to save power or use renewable energy generated by solar power has attracted much attention.

The existing cholesteric liquid crystal display (ChLCD) and MicroLED displays are both transparent and can be used in photovoltaic power generation devices. However, how to combine ChLCD and MicroLED with photovoltaic power generation device requires a new panel configuration structure to achieve the synergistic effect of the two displays, and increase the power generation efficiency of the photovoltaic power generation device. In addition, since all of the two displays and the photovoltaic power generation device exhibit periodic stripes, any overlapping of them easily leads to the becoming of moiré patterns on the image screen, which affects the visual quality seriously. In view of this, developing a composite display device with high power generation efficiency and less likely to form moiré patterns has become an urgent problem that related industries want to solve currently.

## SUMMARY

According to one aspect of the present disclosure, a composite self-powered transparent display device includes a first light-transmitting display unit, a second light-transmitting display unit and a power generation module. The first light-transmitting display unit includes a first light-transmitting region and a light non-transmitting region. The first light-transmitting region is configured to provide a light to enter itself. The light non-transmitting region is disposed around the first light-transmitting region. The second light-transmitting display unit is stacked on the first light-transmitting display unit, and includes a second light-transmitting region and a peripheral region.

The second light-transmitting region overlaps with the first light-transmitting region. The peripheral region is disposed around the second light-transmitting region and overlaps with the light non-transmitting region. The power generation module is stacked on the second light-transmitting display unit. The light penetrates the first light-transmitting region and the second light-transmitting region sequentially and enters the power generation module. The power generation module converts the light into an electrical energy to provide the electrical energy to the first light-transmitting display unit and the second light-transmitting display unit.

According to the composite self-powered transparent display device of the aforementioned aspect, wherein the power generation module includes an energy hunting region for converting the light into the electrical energy, and the energy hunting region overlaps with the second light-transmitting region.

According to the composite self-powered transparent display device of the aforementioned aspect, wherein a total area of the first light-transmitting region and the light non-transmitting region is $A_1$, an overlapping area of an overlapping region of the first light-transmitting region and the second light-transmitting region is $A_2$, and the following conditions are satisfied: $A_2 / A_1 \geq 50\%$.

According to the composite self-powered transparent display device of the aforementioned aspect, wherein the first light-transmitting display unit is an active light-emitting panel, and the second light-transmitting display unit is a trans-reflective light-emitting panel.

According to the composite self-powered transparent display device of the aforementioned aspect, wherein the first light-transmitting region is a transparent plate, and the second light-transmitting region is a pixel region.

According to the composite self-powered transparent display device of the aforementioned aspect, wherein the light non-transmitting region includes a plurality of scan lines and a plurality of data lines, and the peripheral region is made of a transparent material.

According to the composite self-powered transparent display device of the aforementioned aspect, wherein the light non-transmitting region includes a plurality of first scan lines and a plurality of first data lines, and the peripheral region includes a plurality of second scan lines and a plurality of second data lines.

According to the composite self-powered transparent display device of the aforementioned aspect, wherein the power generation module is a crystalline silicon solar cell, a thin film solar cell, an organic solar cell (OPV), a perovskite solar cell (PSC) or a dye sensitized solar cell (DSSC).

According to the composite self-powered transparent display device of the aforementioned aspect, wherein the power generation module includes a plurality of power generation units and a plurality of conductive wires. The plurality of power generation units are arranged at intervals. Each of the power generation units has a unit length, and a unit spacing is disposed between two of the power generation units. The plurality of conductive wires are arranged at intervals and configured to connect the power generation units in series. A wire spacing is disposed between two of the conductive wires. At least one of the unit length, the unit spacing and the wire spacing is greater than or equal to 1 cm.

According to the composite self-powered transparent display device of the aforementioned aspect, wherein the composite self-powered transparent display device further includes a power storage unit. The power storage unit is electrically connected to the first light-transmitting display unit, the second light-transmitting display unit and the power generation module. The power storage unit is configured to store the electrical energy and provide the electrical energy to the first light-transmitting display unit and the second light-transmitting display unit.

According to another aspect of the present disclosure, a composite self-powered transparent display device includes a first light-transmitting display unit, a second light-transmitting display unit and a power generation module. The first light-transmitting display unit includes a first light-transmitting region and a peripheral region. The first light-transmitting region is configured to provide a light to enter itself. The peripheral region is disposed around the first light-transmitting region. The second light-transmitting display unit is stacked on the first light-transmitting display unit, and includes a second light-transmitting region and a light non-transmitting region. The second light-transmitting region overlaps with the first light-transmitting region. The light non-transmitting region is disposed around the second light-transmitting region and overlaps with the peripheral region. The power generation module is stacked on the second light-transmitting display unit. The light penetrates the first light-transmitting region and the second light-transmitting region sequentially and enters the power generation module. The power generation module converts the light into an electrical energy to provide the electrical energy to the first light-transmitting display unit and the second light-transmitting display unit.

According to the composite self-powered transparent display device of the aforementioned aspect, wherein the power generation module includes an energy hunting region for converting the light into the electrical energy, and the energy hunting region overlaps with the second light-transmitting region.

According to the composite self-powered transparent display device of the aforementioned aspect, wherein a total area of the first light-transmitting region and the peripheral region is $A_1$, and an overlapping area of an overlapping region of the first light-transmitting region and the second light-transmitting region is $A_2$, and the following conditions are satisfied: $A_2 / A_1 \geq 50\%$.

According to the composite self-powered transparent display device of the aforementioned aspect, wherein the first light-transmitting display unit is a trans-reflective light-emitting panel, and the second light-transmitting display unit is an active light-emitting panel.

According to the composite self-powered transparent display device of the aforementioned aspect, wherein the first light-transmitting region is a pixel region, and the second light-transmitting region is a transparent plate.

According to the composite self-powered transparent display device of the aforementioned aspect, wherein the peripheral region is made of a transparent material, and the light non-transmitting region includes a plurality of scan lines and a plurality of data lines.

According to the composite self-powered transparent display device of the aforementioned aspect, wherein the peripheral region includes a plurality of first scan lines and a plurality of first data lines, and the light non-transmitting region includes a plurality of second scan lines and a plurality of second data lines.

According to the composite self-powered transparent display device of the aforementioned aspect, wherein the power generation module is a crystalline silicon solar cell, a thin film solar cell, an organic solar cell (OPV), a perovskite solar cell (PSC) or a dye sensitized solar cell (DSSC).

According to the composite self-powered transparent display device of the aforementioned aspect, wherein the power generation module includes a plurality of power generation units and a plurality of conductive wires. The plurality of power generation units are arranged at intervals. Each of the power generation units has a unit length, and a unit spacing is disposed between two of the power generation units. The plurality of conductive wires are arranged at intervals and configured to connect the power generation units in series. A wire spacing is disposed between two of the conductive wires. At least one of the unit length, the unit spacing and the wire spacing is greater than or equal to 1 cm.

According to the composite self-powered transparent display device of the aforementioned aspect, wherein the composite self-powered transparent display device further includes a power storage unit. The power storage unit is electrically connected to the first light-transmitting display unit, the second light-transmitting display unit and the power generation module. The power storage unit is configured to store the electrical energy and provide the electrical energy to the first light-transmitting display unit and the second light-transmitting display unit.

## BRIEF DESCRIPTION OF THE DRAWINGS

The present disclosure can be more fully understood by reading the following detailed description of the embodiment, with reference made to the accompanying drawings as follows:

Fig. 1 shows a three-dimensional schematic view of a composite self-powered transparent display device according to a first example of a first embodiment of the present disclosure.

Fig. 2 shows an exploded view of the composite self-powered transparent display device shown in Fig. 1.

Fig. 3 shows a top view of the composite self-powered transparent display device shown in Fig. 1.

Fig. 4 shows a partially-transparent top view of a power generation module of the composite self-powered transparent display device shown in Fig. 1.

Fig. 5 shows an exploded view of a composite self-powered transparent display device according to a second example of a first embodiment of the present disclosure.

Fig. 6 shows a three-dimensional schematic view of a composite self-powered transparent display device according to a first example of a second embodiment of the present disclosure.

Fig. 7 shows an exploded view of the composite self-powered transparent display device shown in Fig. 6.

Fig. 8 shows a top view of the composite self-powered transparent display device shown in Fig. 6.

Fig. 9 shows an exploded view of a composite self-powered transparent display device according to a second example of a second embodiment of the present disclosure.

Fig. 10 shows a top view of the composite self-powered transparent display device shown in Fig. 9.

## DETAILED DESCRIPTION

The embodiment will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected" to another element, it can be directly connected to the other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component.

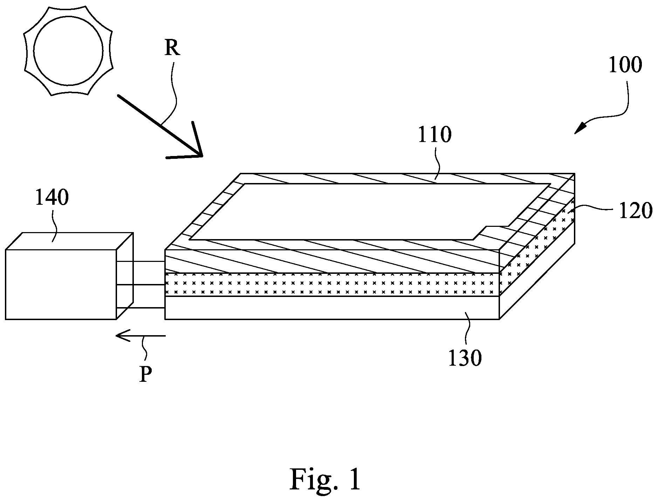

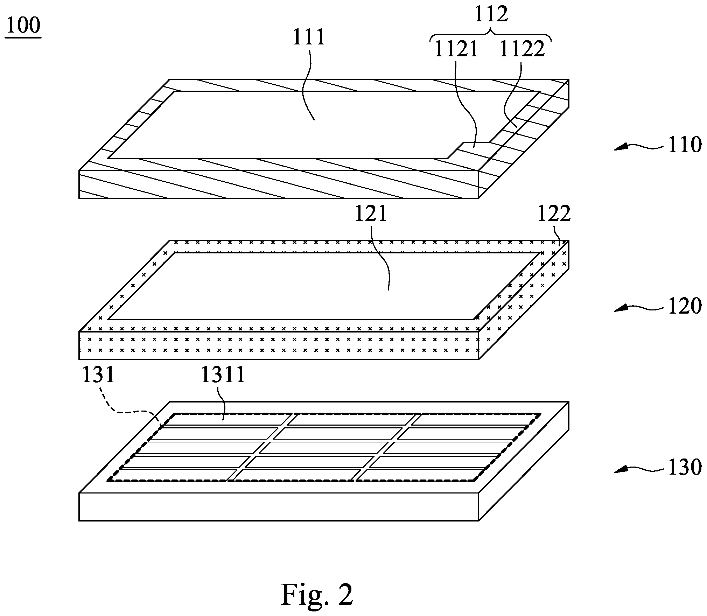

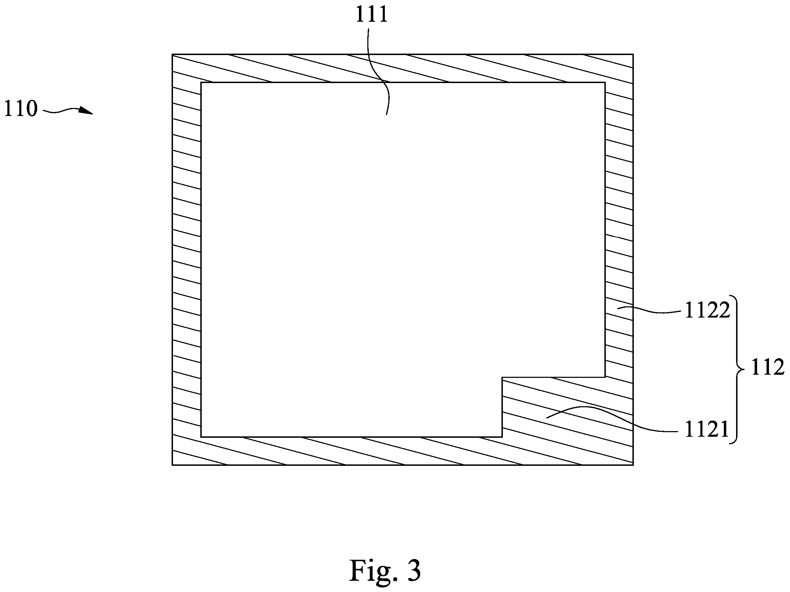

Reference is made to Figs. 1, 2 and 3. Fig. 1 shows a three-dimensional schematic view of a composite self-powered transparent display device according to a first example of a first embodiment of the present disclosure. Fig. 2 shows an exploded view of the composite self-powered transparent display device shown in Fig. 1. Fig. 3 shows a top view of the composite self-powered transparent display device shown in Fig. 1. As shown in Figs. 1, 2 and 3, the composite self-powered transparent display device 100 is formed by laminating a multi-layer structure, which includes a first light-transmitting display unit 110, a second light-transmitting display unit 120 and a power generation module 130.

The first light-transmitting display unit 110 is the uppermost layer of the composite self-powered transparent display device 100 and includes a first light-transmitting region 111 and a light non-transmitting region 112. The first light-transmitting region 111 is configured to provide a light R to enter itself. The light non-transmitting region 112 is disposed around the first light-transmitting region 111. The second light-transmitting display unit 120 is the middle layer of the composite self-powered transparent display device 100, and stacked below the first light-transmitting display unit 110. The second light-transmitting display unit 120 includes a second light-transmitting region 121 and a peripheral region 122. The second light-transmitting region 121 overlaps with the first light-transmitting region 111. The peripheral region 122 is disposed around the second light-transmitting region 121 and overlaps with the light non-transmitting region 112. The power generation module 130 is stacked below the second light-transmitting display unit 120. The light R penetrates the first light-transmitting region 111 and the second light-transmitting region 121 sequentially and enters the power generation module 130. The power generation module 130 is the lowest layer of the composite self-powered transparent display device 100, and converts the light R into an electrical energy P to provide the electrical energy P to the first light-transmitting display unit 110 and the second light-transmitting display unit 120.

In particular, an adhesive layer (not shown) with high transmittance is disposed between the first light-transmitting display unit 110 and the second light-transmitting display unit 120, and another adhesive layer (not shown) with high transmittance is disposed between the second light-transmitting display unit 120 and the power generation module 130. The two adhesive layers can both be composed of optical clear adhesive (OCA). Since the thickness of each of the two adhesive layers is only between tens to hundreds of microns, the thickness can be ignored. Thus, the first light-transmitting display unit 110, the second light-transmitting display unit 120 and the power generation module 130 are in close contact with each other.

The first light-transmitting display unit 110 can be an active light-emitting panel, such as a micro light-emitting diode (MicroLED) panel.

The first light-transmitting region 111 is a transparent substrate or a transparent plate made of a transparent material. The first light-transmitting region 111 can be, for example, but not limited to a transparent substrate made of indium tin oxide (ITO).

The light non-transmitting region 112 includes a first region 1121 and a second region 1122 that are connected to each other and opaque. The first region 1121 can include a plurality of LED chips and a plurality of thin-film transistors (TFTs). The second region 1122 is a rectangular frame and can include a plurality of scan lines for transmitting scan signals to the LED chips and a plurality of data lines for transmitting data signals to the LED chips. The first region 1121 is centrally located at a corner position inside the second region 1122 to reduce the opaque region of the first light-transmitting display unit 110 and enlarge the transparent region of the first light-transmitting display unit 110, so that the area allowing the light R to penetrate (i.e., the area of first light-transmitting region 111 in Fig. 3) is increased.

The second light-transmitting display unit 120 can be a trans-reflective light-emitting panel, such as a cholesteric liquid crystal display (ChLCD) panel, and its driving mode is passive, so the second light-transmitting display unit 120 does not have TFT elements. ChLCD owns trans-reflective feature, when ChLCD driven at planar mode shows reflective function and at focal conic mode shows transmitance function respectively. The second light-transmitting region 121 is a pixel region (i.e., an effective pixel region of ChLCD), which uses the characteristics of cholesteric liquid crystals to reflect the light R to provide an image, and also allows the light R to penetrate to the power generation module 130 located at the bottom of the composite self-powered transparent display device 100. In detail, the light R can be outdoor or indoor ambient light. When the second light-transmitting display unit 120 is in a planar mode, the cholesteric liquid crystals are arranged neatly, so that most of the light R is reflected by the second light-transmitting region 121, but there is still a small part of the light R that can pass through the second light-transmitting region 121 to the power generation module 130. When the second light-transmitting display unit 120 is in a focal conic mode, the arrangement of the cholesteric liquid crystals is disordered, and the second light-transmitting region 121 scatters the light R, so the part of the light R that can penetrate to the power generation module 130 is increase, resulting in improved power generation efficiency. The peripheral region 122 can be used as an isolation region. The isolation region is a non-conductive isolation layer surrounding the second light-transmitting region 121, and made of a transparent material. The transparent material can be, for example, but not limited to glass. Therefore, the composite self-powered transparent display device 100 of the present disclosure has the functions of active light-emitting and trans-reflective light-emitting. At the same time, the light R can be utilized by the power generation module 130 at the bottom of the composite self-powered transparent display device 100, which can not only reduce the reflected light but also improve the performance under strong light. On the other hand, the composite self-powered transparent display device 100 can use the power generation module 130 at the bottom to perform photoelectric conversion to have self-generated effect and achieve energy saving effect.

In addition, a total area (that is, an area of the first light-transmitting display unit 110) of the first light-transmitting region 111 and the light non-transmitting region 112 is $A_1$, an overlapping area of an overlapping region of the first light-transmitting region 111 and the second light-transmitting region 121 is $A_2$, and the following conditions are satisfied: $A_2 / A_1 \geq 50\%$, and preferably, $A_2 / A_1 \geq 90\%$. Therefore, the composite self-powered transparent display device 100 of the present disclosure increases the light-transmitting region through the structural configuration in which the first light-transmitting region 111 overlaps with the second light-transmitting region 121 to effectively reduce the region that blocks the light R, thereby improving the power generation efficiency of the power generation module 130. In the embodiment, the first light-transmitting region 111 can completely overlap or partially overlap with the second light-transmitting region 121. If the first light-transmitting region 111 and the second light-transmitting region 121 are completely overlapped, the overlapping region of the first light-transmitting region 111 and the second light-transmitting region 121 can be maximized to achieve high power generation efficiency.

Further, in the conventional composite display devices, multiple scan lines and data lines exhibit periodic stripes, which form moiré patterns on the image easily, thereby degrading visual quality. However, the present disclosure, through the overlapping arrangement of the first light-transmitting region 111 and the second light-transmitting region 121 and the overlapping arrangement of the light non-transmitting region 112 and the peripheral region 122, the light non-transmitting region 112 with the scan lines and the data lines is allowed to avoid the image displayed by the first light-transmitting region 111 and the second light-transmitting region 121, thereby effectively reducing the chance of moiré pattern formation and ensuring the high image quality of the composite self-powered transparent display device 100.

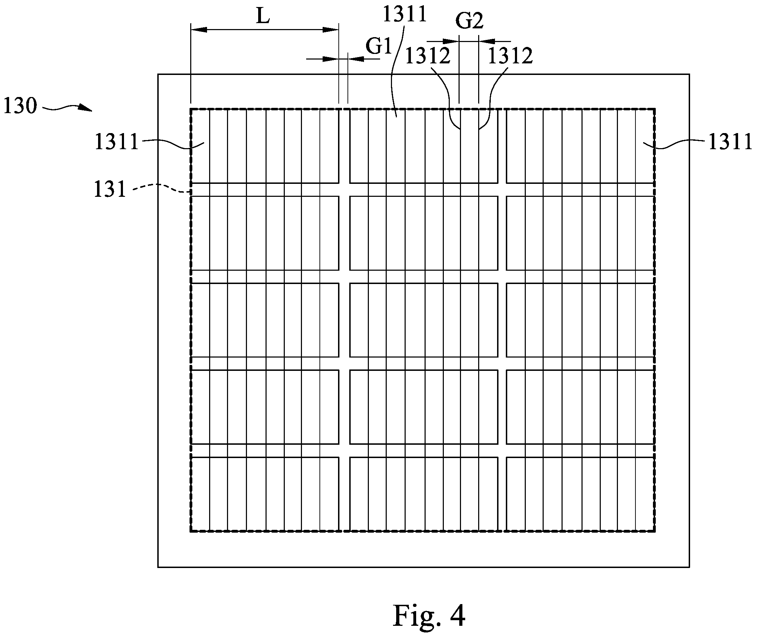

Reference is made to Figs. 1 to 3 and 4. Fig. 4 shows a partially-transparent top view of a power generation module of the composite self-powered transparent display device shown in Fig. 1. As shown in Figs. 1 to 4, the power generation module 130 can be, for example, but not limited to a crystalline silicon solar cell, a thin film solar cell, an organic solar cell (OPV), a perovskite solar cell (PSC) or a dye sensitized solar cell (DSSC), or other solar cells that can convert ambient light into the electrical energy P. The power generation module 130 can include an energy hunting region 131 for converting the light R into the electrical energy P. The energy hunting region 131 is an effective power generation region of the power generation module 130. The effective power generation region actually refers to a region with the light-to-electricity conversion function, which needs to exclude non-power generation region (such as an insulation region, a prohibited region, and a wire region). The energy hunting region 131 includes a plurality of power generation units 1311 arranged in an array, and each of the power generation unit 1311 can be a solar cell. The energy hunting region 131 can completely overlap or partially overlap with the second light-transmitting region 121. If the energy hunting region 131 and the second light-transmitting region 121 are completely overlapped, the effective power generation region that absorbs the light R can be maximized, thereby improving the power generation efficiency. The aforementioned wire region can transmit the current (corresponding to the electrical energy P) generated by the energy hunting region 131 to the first light-transmitting display unit 110, the second light-transmitting display unit 120 or an external circuit coupled thereto.

The composite self-powered transparent display device 100 can further include a power storage unit 140, such as a rechargeable battery. The power storage unit 140 is electrically connected to the first light-transmitting display unit 110, the second light-transmitting display unit 120 and the power generation module 130. The power storage unit 140 receives and stores the electrical energy P from the wire region of the power generation module 130, and provides the electrical energy P to the first light-transmitting display unit 110 and the second light-transmitting display unit 120.

In Fig. 4, the power generation units 1311 of the energy hunting region 131 are arranged at intervals from each other. Each of the power generation units 1311 has a unit length L. A unit spacing G1 is disposed between two of the power generation units 1311 that are spaced apart from each other. In addition, the power generation module 130 can further include a plurality of conductive wires 1312. The conductive wires 1312 are arranged at intervals and configured to connect the power generation units 1311 of the energy hunting region 131 in series. A wire spacing G2 is disposed between two of the conductive wires 1312. At least one of the unit length L, the unit spacing G1 and the wire spacing G2 is greater than or equal to 1 cm. In detail, both the power generation units 1311 and the conductive wires 1312 exhibit periodic stripes, and even the insulation region used to electrically isolate the power generation units 1311 also exhibits periodic stripes. The common pixel size of the general display is between 50 and 300 microns ($\mu$m), and 3 to 17 stripes can be seen at the viewing angle of 1 degree at the normal viewing distance (such as 50 cm). Thus, as long as the unit length L, the unit spacing G1 and the wire spacing G2 are controlled above 1 cm, and the light-dark contrast of the periodic stripes is less than 0.55, the sensitivity of human vision to moiré patterns is reduced, which can prevent the power generation module 130 from causing fringe spatial interference on the first light-transmitting display unit 110 and the second light-transmitting display unit 120, and reducing the probability of the moiré effect.

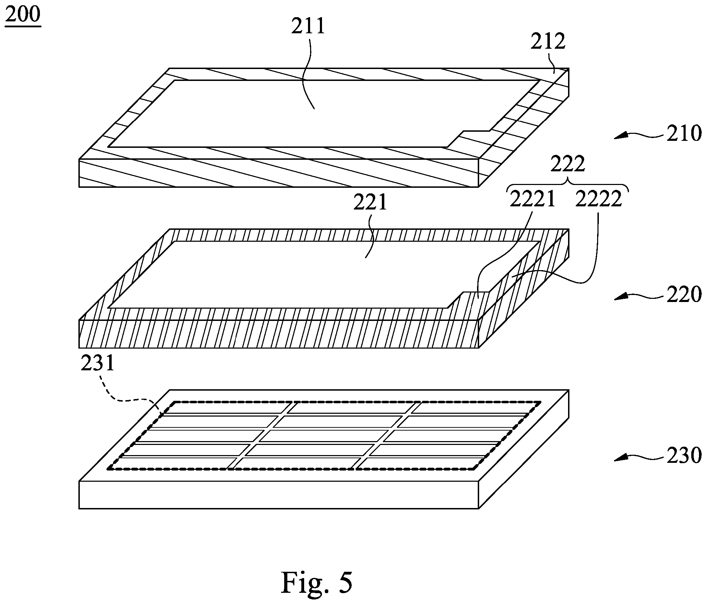

Reference is made to Fig. 5. Fig. 5 shows an exploded view of a composite self-powered transparent display device according to a second example of a first embodiment of the present disclosure. As shown in Fig. 5, the composite self-powered transparent display device 200 includes a first light-transmitting display unit 210, a second light-transmitting display unit 220 and a power generation module 230. The first light-transmitting display unit 210 and the power generation module 230 are the same components as the first light-transmitting display unit 110 and the power generation module 130 in Fig. 2 respectively, so their detailed structures and functions are not described again herein.

The difference from Fig. 2 is that the second light-transmitting display unit 220 can be a trans-reflective light-emitting panel, such as a ChLCD panel, and its driving mode is active, so the second light-transmitting display unit 220 can have TFT elements. The second light-transmitting display unit 220 includes a second light-transmitting region 221 and a peripheral region 222 surrounding the second light-transmitting region 221. The second light-transmitting region 221 overlaps with a first light-transmitting region 211 of the first light-transmitting display unit 210, and overlaps with an energy hunting region 231 of the power generation module 230. The peripheral region 222 overlaps with a light non-transmitting region 212 of the first light-transmitting display unit 210. In detail, the light non-transmitting region 212 can include a plurality of first scan lines and a plurality of first data lines. The peripheral region 222 can be used as another light non-transmitting region, and includes a third region 2221 and a fourth region 2222 that are connected to each other and opaque. The third region 2221 can have a plurality of TFT elements, and the fourth region 2222 appears as a rectangular frame and can include a plurality of second scan lines and a plurality of second data lines. The third region 2221 is centrally located at a corner position inside the fourth region 2222, thereby reducing the opaque region of the second light-transmitting display unit 220 and enlarging the transparent region of the second light-transmitting display unit 220. Since the upper opaque first scan lines and the first data lines overlap with the lower opaque second scan lines and second data lines, and the first light-transmitting region 211, the second light-transmitting region 221 and the energy hunting region 231 overlap each other, maximizing the light-transmitting region and increasing the light aperture ratio can not only improve the power generation efficiency of the power generation module 230, but also avoid the moiré effect caused by the spatial interference of stripes on the upper and lower panels.

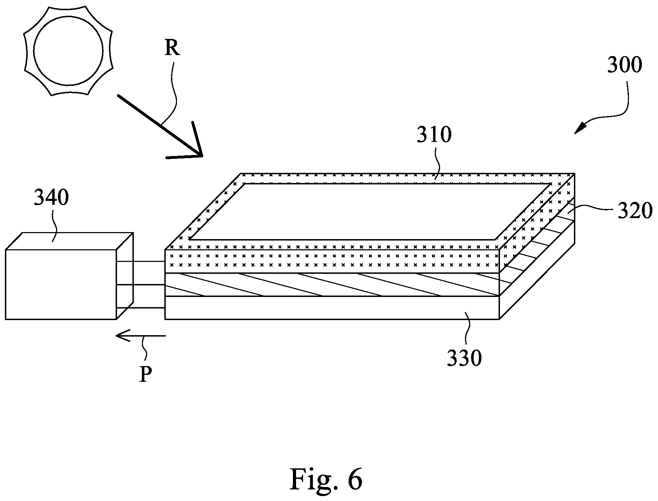

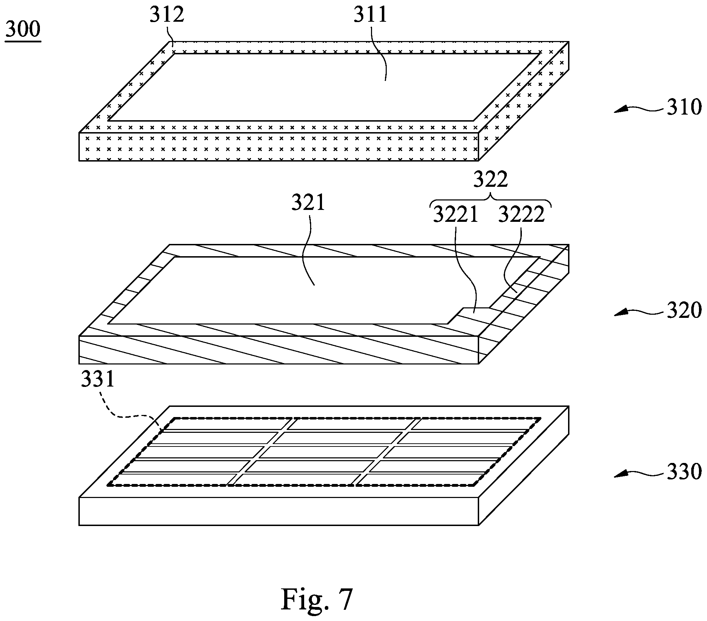

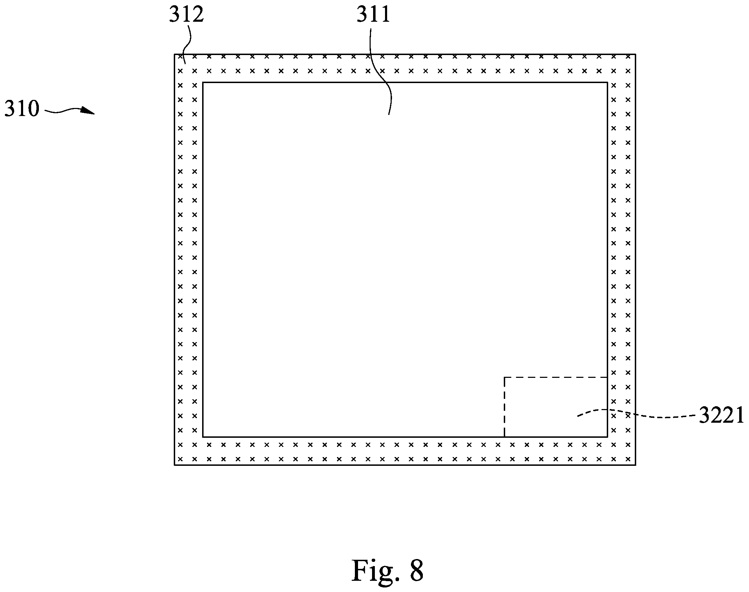

Reference is made to Figs. 6, 7 and 8. Fig. 6 shows a three-dimensional schematic view of a composite self-powered transparent display device according to a first example of a second embodiment of the present disclosure. Fig. 7 shows an exploded view of the composite self-powered transparent display device shown in Fig. 6. Fig. 8 shows a top view of the composite self-powered transparent display device shown in Fig. 6. As shown in Figs. 6, 7 and 8, the composite self-powered transparent display device 300 is formed by laminating a multi-layer structure, which includes a first light-transmitting display unit 310, a second light-transmitting display unit 320, a power generation module 330 and a power storage unit 340. The power generation module 330 and the power storage unit 340 are the same components as the power generation module 130 and the power storage unit 140 in Fig. 1 respectively, so their detailed structures and functions are not described again herein.

The first light-transmitting display unit 310 includes a first light-transmitting region 311 and a peripheral region 312. The first light-transmitting region 311 is configured to provide the light R to enter itself. The peripheral region 312 is disposed around the first light-transmitting region 311. The second light-transmitting display unit 320 is stacked below the first light-transmitting display unit 310 and includes a second light-transmitting region 321 and a light non-transmitting region 322. The second light-transmitting region 321 overlaps with the first light-transmitting region 311. The light non-transmitting region 322 is disposed around the second light-transmitting region 321 and overlaps with the peripheral region 312. The power generation module 330 is stacked below the second light-transmitting display unit 320. The light R penetrates the first light-transmitting region 311 and the second light-transmitting region 321 sequentially, and enters the power generation module 330. An energy hunting region 331 of the power generation module 330 converts the light R into the electrical energy P to provide the electrical energy P to the first light-transmitting display unit 310 and the second light-transmitting display unit 320.

In detail, the first light-transmitting display unit 310 can be a trans-reflective light-emitting panel, such as a ChLCD panel, and its driving mode is passive, so the first light-transmitting display unit 310 does not have TFT elements. The first light-transmitting region 311 is a pixel region (i.e., an effective pixel region of ChLCD), which uses the characteristics of cholesterol liquid crystals to reflect the light R to provide an image, and also allows the light R to penetrate to energy hunting region 331 of the power generation module 330. The peripheral region 312 can be used as an isolation region. The isolation region is a non-conductive isolation layer surrounding the first light-transmitting region 311 and made of a transparent material. The transparent material can be, for example, but not limited to glass.

The second light-transmitting display unit 320 can be an active light-emitting panel, such as a MicroLED panel. The second light-transmitting region 321 is a transparent substrate or a transparent plate made of a transparent material, such as an ITO transparent substrate. The light non-transmitting region 322 includes a first region 3221 and a second region 3222 that are connected to each other and opaque. The first region 3221 can include a plurality of LED chips and a plurality of TFTs. The second region 3222 appears as a rectangular frame and can include a plurality of scan lines and a plurality of data lines. The first region 3221 is centrally located at a corner position inside the second region 3222, thereby reducing the opaque region of the second light-transmitting display unit 320 and enlarging the transparent region of the second light-transmitting display unit 320, thereby increasing the area that allows the light R to penetrate.

In addition, a total area (that is, an area of the first light-transmitting display unit 310) of the first light-transmitting region 311 and the peripheral region 312 is $A_1$, an overlapping area of an overlapping region of the first light-transmitting region 311 and the second light-transmitting region 321 is $A_2$, and the following conditions are satisfied: $A_2 / A_1 \geq 50\%$, and preferably, $A_2 / A_1 \geq 90\%$. Therefore, the composite self-powered transparent display device 300 of the present disclosure increases the light-transmitting region through the structural configuration in which the first light-transmitting region 311 overlaps with the second light-transmitting region 321 to effectively reduce the region that blocks the light R, thereby improving the power generation efficiency of the power generation module 330.

Specifically, by exchanging the positions of the first light-transmitting display unit 310 and the second light-transmitting display unit 320 of the composite self-powered transparent display device 300 in Fig. 6, the composite self-powered transparent display device 100 in Fig. 1 can be formed. In other words, the first light-transmitting display unit 310 in Fig. 6 and the second light-transmitting display unit 120 in Fig. 1 are the same components, and the second light-transmitting display unit 320 and the first light-transmitting display unit 110 are also the same components. Therefore, the composite self-powered transparent display device 300 of the present disclosure also has the functions of trans-reflective light-emitting and active light-emitting, and uses the energy hunting region 331 of the power generation module 330 to perform photoelectric conversion to have self-generated effect. Further, the composite self-powered transparent display device 300 of the present disclosure uses the overlapping arrangement of the first light-transmitting region 311 and the second light-transmitting region 321 and the overlapping arrangement of the peripheral region 312 and the light non-transmitting region 322 to allow the light non-transmitting region 322 with the scan lines and the data lines to avoid the image displayed by the first light-transmitting region 311 and the second light-transmitting region 321, thereby effectively reducing the chance of moiré pattern formation and ensuring the high image quality of the composite self-powered transparent display device 300.

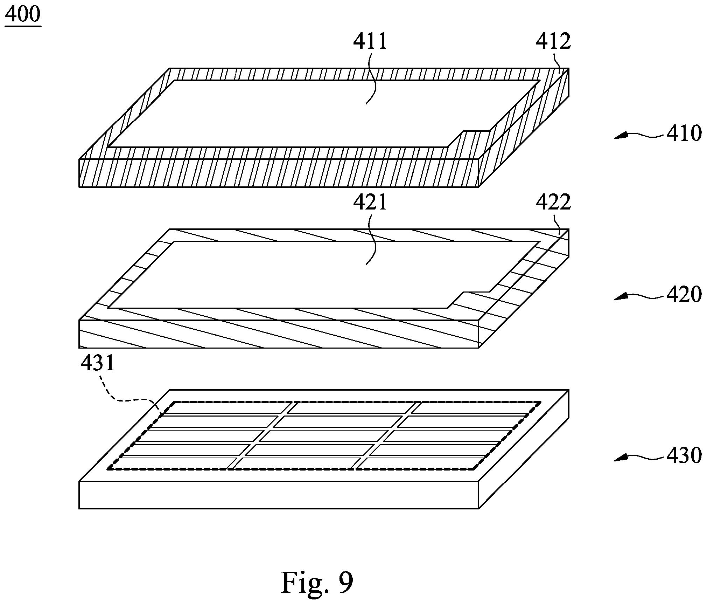

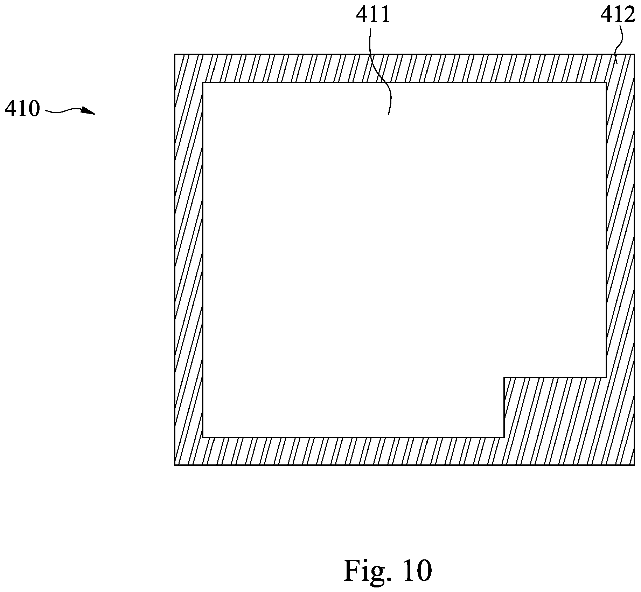

Reference is made to Figs. 9 and 10. Fig. 9 shows an exploded view of a composite self-powered transparent display device according to a second example of a second embodiment of the present disclosure. Fig. 10 shows a top view of the composite self-powered transparent display device shown in Fig. 9. As shown in Figs. 9 and 10, the composite self-powered transparent display device 400 includes a first light-transmitting display unit 410, a second light-transmitting display unit 420 and a power generation module 430. The second light-transmitting display unit 420 and the power generation module 430 are the same components as the second light-transmitting display unit 320 and the power generation module 330 in Fig. 7 respectively, so their detailed structures and functions are not described again herein.

The difference from Fig. 7 is that the first light-transmitting display unit 410 can be a trans-reflective light-emitting panel, such as a ChLCD panel, and its driving mode is active, so the first light-transmitting display unit 410 can have TFT elements. The first light-transmitting display unit 410 includes a first light-transmitting region 411 and a peripheral region 412 surrounding the first light-transmitting region 411. The first light-transmitting region 411 overlaps with a second light-transmitting region 421 of the second light-transmitting display unit 420, and overlaps with an energy hunting region 431 of the power generation module 430. The peripheral region 412 overlaps with a light non-transmitting region 422 of the second light-transmitting display unit 420. In detail, the peripheral region 412 can be used as another light non-transmitting region, and the another light non-transmitting region includes a plurality of first scan lines and a plurality of first data lines. The light non-transmitting region 422 can include a plurality of second scan lines and a plurality of second data lines. Since the upper opaque first scan lines and the first data lines overlap with the lower opaque second scan lines and second data lines, and the first light-transmitting region 411, the second light-transmitting region 421 and the energy hunting region 431 overlap each other, maximizing the light-transmitting region and increasing the light aperture ratio can not only improve the power generation efficiency of the power generation module 430, but also avoid the moiré effect caused by the spatial interference of stripes on the upper and lower panels.

According to the aforementioned embodiments and examples, the advantages of the present disclosure are described as follows. 1. The composite self-powered transparent display device has the functions of active light-emitting and trans-reflective light-emitting to realize two different display technologies, and can use the power generation module to perform photoelectric conversion to achieve the self-generated effect. 2. The structural configuration in which the first light-transmitting region overlaps with the second light-transmitting region is utilized to maximize the area allowing the light to penetrate, thereby improving the power generation efficiency of the power generation module. 3. The overlapping arrangement of the first light-transmitting region and the second light-transmitting region and the overlapping arrangement of the light non-transmitting region and the peripheral region with the scan lines and the data lines effectively reduce the chance of moiré pattern formation, thereby ensuring the high image quality.

**Claims**

1. A composite self-powered transparent display device (100), **characterized in** comprising:

   a first light-transmitting display unit (110) comprising:

      a first light-transmitting region (111) configured to provide a light (R) to enter itself; and a light non-transmitting region (112) disposed around the first light-transmitting region (111);

   a second light-transmitting display unit (120) stacked on the first light-transmitting display unit (110), and comprising:

      a second light-transmitting region (121) overlapping with the first light-transmitting region (111); and a peripheral region (122) disposed around the second light-transmitting region (121) and overlapping with the light non-transmitting region (112); and

   a power generation module (130) stacked on the second light-transmitting display unit (120), wherein the light (R) penetrates the first light-transmitting region (111) and the second light-transmitting region (121) sequentially and enters the power generation module (130), and the power generation module (130) converts the light (R) into an electrical energy (P) to provide the electrical energy (P) to the first light-transmitting display unit (110) and the second light-transmitting display unit (120).

2. The composite self-powered transparent display device (100) of claim 1, wherein the power generation module (130) comprises an energy hunting region (131) for converting the light (R) into the electrical energy (P), and the energy hunting region (131) overlaps with the second light-transmitting region (121).

3. The composite self-powered transparent display device (100) of any of claims 1-2, wherein a total area of the first light-transmitting region (111) and the light non-transmitting region (112) is $A_1$, an overlapping area of an overlapping region of the first light-transmitting region (111) and the second light-transmitting region (121) is $A_2$, and the following conditions are satisfied:

$$A_2 / A_1 \geq 50\%.$$

4. The composite self-powered transparent display device (100) of any of claims 1-3, wherein the first light-transmitting display unit (110) is an active light-emitting panel, and the second light-transmitting display unit (120) is a trans-reflective light-emitting panel.

5. The composite self-powered transparent display device (100) of any of claims 1-4, wherein the first light-transmitting region (111) is a transparent plate, and the second light-transmitting region (121) is a pixel region.

6. The composite self-powered transparent display device (100) of any of claims 1-5, wherein the light non-transmitting region (112) comprises a plurality of scan lines and a plurality of data lines, and the peripheral region (122) is made of a transparent material.

7. The composite self-powered transparent display device (200) of any of claims 1-6, wherein the light non-transmitting region (212) comprises a plurality of first scan lines and a plurality of first data lines, and the peripheral region (222) comprises a plurality of second scan lines and a plurality of second data lines.

8. The composite self-powered transparent display device (100) of any of claims 1-7, wherein the power generation module (130) is a crystalline silicon solar cell, a thin film solar cell, an organic solar cell (OPV), a perovskite solar cell (PSC) or a dye sensitized solar cell (DSSC).

9. The composite self-powered transparent display device (100) of any of claims 1-8, wherein the power generation module (130) comprises:

a plurality of power generation units (1311) arranged at intervals, wherein each of the power generation units (1311) has a unit length (L), and a unit spacing (G1) is disposed between two of the power generation units (1311); and
a plurality of conductive wires (1312) arranged at intervals and configured to connect the power generation units (1311) in series, wherein a wire spacing (G2) is disposed between two of the conductive wires (1312);
wherein at least one of the unit length (L), the unit spacing (G1) and the wire spacing (G2) is greater than or equal to 1 cm.

10. The composite self-powered transparent display device (100) of any of claims 1-9, further comprising:
a power storage unit (140) electrically connected to the first light-transmitting display unit (110), the second light-transmitting display unit (120) and the power generation module (130), wherein the power storage unit (140) is configured to store the electrical energy (P) and provide the electrical energy (P) to the first light-transmitting display unit (110) and the second light-transmitting display unit (120).

11. A composite self-powered transparent display device (300), **characterized in** comprising:

a first light-transmitting display unit (310) comprising:

a first light-transmitting region (311) configured to provide a light (R) to enter itself; and
a peripheral region (312) disposed around the first light-transmitting region (311);

a second light-transmitting display unit (320) stacked on the first light-transmitting display unit (310), and comprising:

a second light-transmitting region (321) overlapping with the first light-transmitting region (311); and
a light non-transmitting region (322) disposed around the second light-transmitting region (321) and overlapping with the peripheral region (312); and

a power generation module (330) stacked on the second light-transmitting display unit (320), wherein the light (R) penetrates the first light-transmitting region (311) and the second light-transmitting region (321) sequentially and enters the power generation module (330), and the power generation module (330) converts the light (R) into an electrical energy (P) to provide the electrical energy (P) to the first light-transmitting display unit (310) and the second light-transmitting display unit (320).

12. The composite self-powered transparent display device (300) of claim 11, wherein the power generation module (330) comprises an energy hunting region (331) for converting the light (R) into the electrical energy (P), and the energy hunting region (331) overlaps with the second light-transmitting region (321).

13. The composite self-powered transparent display device (300) of any of claims 11-12, wherein a total area of the first light-transmitting region (311) and the peripheral region (312) is $A_1$, and an overlapping area of an overlapping region of the first light-transmitting region (311) and the second light-transmitting region (321) is $A_2$, and the following conditions are satisfied:

$$A_2 / A_1 \geq 50\%.$$

14. The composite self-powered transparent display device (300) of any of claims 11-13, wherein the first light-transmitting display unit (310) is a trans-reflective light-emitting panel, and the second light-transmitting display unit (320) is an active light-emitting panel.

15. The composite self-powered transparent display device (300) of any of claims 11-14, wherein the first light-transmitting region (311) is a pixel region, and the second light-transmitting region (321) is a transparent plate.

16. The composite self-powered transparent display device (300) of any of claims 11-15, wherein the peripheral region (312) is made of a transparent material, and the light non-transmitting region (322) comprises a plurality of scan lines and a plurality of data lines.

17. The composite self-powered transparent display device (400) of any of claims 11-16, wherein the peripheral region (412) comprises a plurality of first scan lines and a plurality of first data lines, and the light non-transmitting region (422) comprises a plurality of second scan lines and a plurality of second data lines.

18. The composite self-powered transparent display device (300) of any of claims 11-17, wherein the power generation module (330) is a crystalline silicon solar cell, a thin film solar cell, an organic solar cell (OPV), a perovskite solar cell (PSC) or a dye sensitized solar cell (DSSC).

19. The composite self-powered transparent display device (300) of any of claims 11-18, wherein the power generation module (330) comprises:

a plurality of power generation units (1311) arranged at intervals, wherein each of the power generation units (1311) has a unit length (L), and a unit spacing (G1) is disposed between two of the power generation units (1311); and
a plurality of conductive wires (1312) arranged at intervals and configured to connect the power generation units (1311) in series, wherein a wire spacing (G2) is disposed between two of the conductive wires (1312);
wherein at least one of the unit length (L), the unit spacing (G1) and the wire spacing (G2) is greater than or equal to 1 cm.

20. The composite self-powered transparent display device (300) of any of claims 11-19, further comprising:
a power storage unit (340) electrically connected to the first light-transmitting display unit (310), the second light-transmitting display unit (320) and the power generation module (330), wherein the power storage unit (340) is configured to store the electrical energy (P) and provide the electrical energy (P) to the first light-transmitting display unit (310) and the second light-transmitting display unit (320).

Fig. 1

Fig. 2

EP 4 644 980 A1

Fig. 3

Fig. 4

Fig. 5

EP 4 644 980 A1

Fig. 6

Fig. 7

EP 4 644 980 A1

311

312

310

3221

Fig. 8

400

411    412

410

421    422

420

431

430

Fig. 9

EP 4 644 980 A1

Fig. 10

Europäisches
Patentamt

European
Patent Office

Office européen
des brevets

## EUROPEAN SEARCH REPORT

**Application Number**

EP 24 21 6437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/104751 A1 (SAGARDOYBURU MICHEL [CH]) 14 April 2016 (2016-04-14) * figures 1-6 * * paragraph [0022] - paragraph [0047] * ----- | 1-10 | INV. G02F1/133 G02F1/1347 |
| Y | US 2016/043149 A1 (SAGARDOYBURU MICHEL [CH]) 11 February 2016 (2016-02-11) * figures 1-3 * * paragraph [0021] - paragraph [0037] * ----- | 11-20 | |
| Y | US 2022/199939 A1 (GAO XINWEI [CN] ET AL) 23 June 2022 (2022-06-23) * figures 5, 7 * * paragraphs [0068], [0078] * ----- | 1-20 | |
| Y | US 2010/114679 A1 (PAN YANG [US]) 6 May 2010 (2010-05-06) * figures 1-5 * * paragraph [0043] - paragraph [0055] * ----- | 9,10,19, 20 | |

**TECHNICAL FIELDS SEARCHED (IPC)**

G02F

The present search report has been drawn up for all claims

| Place of search | Date of completion of the search | Examiner |
|---|---|---|
| Munich | 28 January 2025 | Kentischer, Florian |

EPO FORM 1503 03.82 (P04C01)

## ANNEX TO THE EUROPEAN SEARCH REPORT
## ON EUROPEAN PATENT APPLICATION NO.

EP 24 21 6437

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| US 2016104751 | A1 | 14-04-2016 | CN | 105513507 A | 20-04-2016 |
| | | | EP | 3007015 A1 | 13-04-2016 |
| | | | HK | 1223722 A1 | 04-08-2017 |
| | | | JP | 2016081033 A | 16-05-2016 |
| | | | KR | 20160042755 A | 20-04-2016 |
| | | | TW | 201614418 A | 16-04-2016 |
| | | | US | 2016104751 A1 | 14-04-2016 |
| US 2016043149 | A1 | 11-02-2016 | CN | 106205413 A | 07-12-2016 |
| | | | EP | 2983208 A1 | 10-02-2016 |
| | | | JP | 6263502 B2 | 17-01-2018 |
| | | | JP | 2016038576 A | 22-03-2016 |
| | | | KR | 20160018388 A | 17-02-2016 |
| | | | KR | 20170118652 A | 25-10-2017 |
| | | | TW | 201614415 A | 16-04-2016 |
| | | | US | 2016043149 A1 | 11-02-2016 |
| US 2022199939 | A1 | 23-06-2022 | CN | 114270554 A | 01-04-2022 |
| | | | EP | 4071841 A1 | 12-10-2022 |
| | | | US | 2022199939 A1 | 23-06-2022 |
| | | | WO | 2021248434 A1 | 16-12-2021 |
| US 2010114679 | A1 | 06-05-2010 | NONE | | |

EPO FORM P0459

For more details about this annex : see Official Journal of the European Patent Office, No. 12/82